# EUROPÄISCHE PATENTSCHRIFT

(11) **EP 3 469 872 B1**
(45) Veröffentlichungstag und Bekanntmachung des Hinweises auf die Patenterteilung: **28.09.2022**
(21) Anmeldenummer: 18199652.1
(22) Anmeldetag: 10.10.2018
(51) Int. Cl.: A01D 34/58, A01D 34/84, A01D 34/43

(54) **ARBEITSGERÄT, ARBEITSFAHRZEUG MIT EINEM SOLCHEN ARBEITSGERÄT, BAUKASTEN ZUM HERSTELLEN DES ARBEITSGERÄTES SOWIE VERFAHREN ZUM BETREIBEN WENIGSTENS DES ARBEITSGERÄTES**
WORKING MACHINE, WORK VEHICLE WITH A SUCH WORKING MACHINE, CONSTRUCTION KIT FOR PRODUCING THE WORKING MACHINE, AND METHOD FOR OPERATING AT LEAST THE WORKING MACHINE
APPAREIL DE TRAVAIL, VÉHICULE DE TRAVAIL DOTÉ D'UN TEL DISPOSITIF DE TRAVAIL, SYSTÈME MODULAIRE DE FABRICATION D'APPAREIL DE TRAVAIL AINSI QUE PROCÉDÉ DE FONCTIONNEMENT D'AU MOINS L'APPAREIL DE TRAVAIL

(30) Priorität: 12.10.2017 DE 102017123792; 14.11.2017 DE 102017126682; 14.11.2017 DE 202017107240 U; 17.10.2017 DE 202017106274 U
(43) Veröffentlichungstag der Anmeldung: 17.04.2019
(73) Patentinhaber: MULAG FAHRZEUGWERK Heinz Wössner GmbH & CO. KG, 77728 Oppenau (DE)
(72) Erfinder: Wössner, Holger, 77704 Oberkirch (DE)
(74) Vertreter: Weickmann & Weickmann PartmbB

(56) Entgegenhaltungen:
- EP-A1- 1 159 866
- EP-A1- 3 360 404
- WO-A1-2016/097784
- WO-A1-2018/024952
- DE-A1-102004 056 233
- DE-A1-102009 029 803
- US-A- 5 502 957
- US-A- 5 794 422
- US-A1- 2008 066 827

## Beschreibung

### I. Anwendungsgebiet

Die Erfindung betrifft ein Arbeitsgerät, welches im Betrieb an einem Trägerfahrzeug montiert ist und während des Arbeitseinsatzes vom Trägerfahrzeug vorwärts bewegt sowie meist auch vom Trägerfahrzeug aus angetrieben wird.

### II. Technischer Hintergrund

Ein typischer Anwendungsfall eines solchen Arbeitsgerätes ist beispielsweise ein an einem Traktor oder einem Unimog oder LKW befestigtes Mähgerät, mit dem der Bewuchs des Untergrundes, insbesondere im Bereich neben dem in Fahrtrichtung fahrenden Trägerfahrzeug, gemäht wird, beispielsweise der Randbereich neben einer Straße.

Das Arbeitsgerät, in diesem Fall dann ein Mähgerät, umfasst als Arbeitskopf einen Mähkopf, der mittels einer Befestigungsvorrichtung am Trägerfahrzeug gehalten ist, wobei diese Befestigungsvorrichtung häufig einen aus mehreren gelenkig miteinander verbundenen Armteilen bestehenden Auslegerarm umfasst, an dessen vorderen freien Ende der Arbeitskopf, in diesem Fall ein Mähkopf, gehalten ist.

Anstelle eines solchen Mähgerätes kann es sich beispielsweise auch um eine Waschvorrichtung handeln, die etwa eine rotierende Waschbürste umfassen kann, die ebenfalls rotierend antreibbar ist wie die Messerwelle eines Mähkopfes und ebenfalls häufig am freien Ende des Auslegerarmes befestigt ist.

Ein solches Arbeitsgerät kann an der Front oder am Heck eines Trägerfahrzeuges befestigt sein, wobei auch Arbeitsgeräte bekannt sind, die zwei getrennte Arbeitsköpfe, insbesondere Mähköpfe, umfassen, welche jeweils an einem separaten Auslegerarm gehalten sind und entweder von der gleichen oder von zwei unterschiedlichen Befestigungsvorrichtungen getragen werden.

Ein solcher Arbeitskopf muss nicht nur mit der notwendigen Leistung angetrieben werden, sondern mittels der Befestigungsvorrichtung auch hinsichtlich seiner Lage und Orientierung von einem Bediener steuerbar sein, der meist in der Fahrerkabine des Trägerfahrzeuges sitzt und das Arbeitsgerät, insbesondere den Arbeitskopf, steuert, meist mittels eines Joysticks.

Derartige Arbeitsgeräte werden - zumindest ab einem Energiebedarf von etwa 10 kW, der vor allem für den Antrieb des Arbeitskopfes benötigt wird - in der Regel hydraulisch angetrieben, indem beispielsweise ein hydraulischer Kopfmotor direkt am Arbeitskopf befestigt ist zum Antreiben des beweglichen, anzutreibenden Arbeits-Elementes, beispielsweise der Messerwelle.

Über Hydraulikleitungen, die entlang der Befestigungsvorrichtungen und ggfs. auch des Auslegerarmes verlaufen, und von einer Hydraulikpumpe mit Hydraulikfluid versorgt werden, die sich meist an der Befestigungsbasis der Befestigungsvorrichtung befindet, wird der Kopfmotor mit Energie in Form von Hydraulik-Medium versorgt.

Die Hydraulikpumpe ist drehfest mechanisch meist mit einer Zapfwelle, gekoppelt, die vom Fahrmotor des Trägerfahrzeuges angetrieben ist.

Diese Lösung weist jedoch Nachteile auf:
a) Zum einen kann sich der Energiebedarf des Kopfmotors stark ändern:
   Bei einem Mähkopf ändert sich der Energiebedarf des Kopfmotors beispielsweise in Abhängigkeit davon, wieviel Kraft zum Abtrennen des Mähgutes benötigt wird.

Denn mittels eines solchen Mähkopfes wird nicht nur einfaches Gras abgemäht, sondern alles, was sich in dem Mähbereich befindet, also von Stauden mit dünnen Ästen bis zu Gebüsch, dessen Äste durchaus eine Dicke von mehreren Zentimetern besitzen können.

Da der Kopfmotor die benötigte Energie - die tatsächlich gelieferte Energiemenge kann u.a. von der Fahrgeschwindigkeit des Trägerfahrzeuges abhängen - immer zeitaktuell von der Hydraulikpumpe zur Verfügung gestellt bekommen muss, kann dies dazu führen, dass entweder bei hohem Energiebedarf des Mähkopfes die Fahrgeschwindigkeit des Trägerfahrzeuges reduziert werden muss und/oder die Drehzahl des Fahrmotors des Trägerfahrzeuges, welcher die Hydraulikpumpe antreibt, aus dem optimalen Bereich, also der optimalen, energieeffizientesten Drehzahl, heraus gesteigert werden muss, wobei jedoch gleichzeitig die Fahrgeschwindigkeit des Trägerfahrzeuges unverändert beibehalten oder gar gesenkt werden soll.

Dies erfordert nicht nur einen hohen steuerungstechnischen Aufwand, sondern wegen des häufigen Betriebes der Fahrmotors abseits der optimalen Drehzahl ist der Treibstoffverbrauch, der durch das Arbeitsgerät hervorgerufen wird, sehr hoch und bildet den Hauptanteil der Betriebskosten eines solchen Arbeitsgerätes.

b)
Des weiteren ist - bezogen auf die zur Verfügung gestellte Leistung - ein Hydraulikmotor relativ schwer im Vergleich zu anderen Motorarten, wodurch das Gewicht des von dem Auslegerarm zu tragenden Arbeitskopfes, an dem sich der Hydraulikmotor unmittelbar befindet, relativ hoch ist, was eine entsprechend schwere und stabile Auslegung der Befestigungsvorrichtung und auch eines ggfs. vorhandenen Auslegerarmes nach sich zieht.

Dies wiederum bedingt entsprechend groß dimensionierte Stellelemente, um die Verstellung und Positionierung aller beweglichen Teile der Befestigungsvorrichtung zu bewirken, und auch eine entsprechend niedrige mögliche Beschleunigung der zu verstellenden Teile der Befestigungsvor-richtung, was die Geschwindigkeit der Positionsveränderung z.B. des Arbeitskopfes begrenzt.

Ein prinzipbedingter Nachteil eines Hydraulikmotors besteht auch darin, dass dessen Größe immer abhängig von der Spitzenlast ist, die der Hydraulikmotor liefern können muss, selbst wenn diese Spitzenlast nur sehr selten und kurzfristig benötigt wird.

c)
Ein weiterer Nachteil ist die Dicke und begrenzte Flexibilität der Hydraulikleitungen, die einen konstruktiven Nachteil darstellen, und darüber hinaus bei Beschädigung ein Umweltrisiko darstellen, indem dann sehr schnell große Mengen an Hydraulikfluid in die Umwelt gelangen können.

Den Arbeitskopf, insbesondere Mähkopf, eines an einem Trägerfahrzeug anzubauenden Arbeitsgerätes nicht wie bisher hydraulisch, sondern elektrisch anzutreiben ist aus der US 2008/0066827 A1 bekannt.

Das Arbeitsgerät ist bei der EP 1159866 A1 an einem Auslegerarm gehalten, der aus mehreren gelenkig miteinander verbundenen Armteilen besteht. Dabei werden die Armteile in ihrer Schwenklage zueinander mittels Hydraulikzylindern verstellt.

Eine vorausschauende Ermittlung, ob in Kürze ein erhöhter Energiebedarf für den Betrieb des Arbeitsgerätes notwendig sein wird, ist bei diesen Schriften ebenfalls nicht beschrieben. DE 102004056233 A1 registriert erst einen bereits erhöhten Anfall von Schnittgut und damit einen erhöhten Energiebedarf im Arbeitsgerät und reagiert erst dann mit einer Leistungs-Erhöhung des Antriebes.

Aus den beiden nachveröffentlichten Schriften EP 3 360 404 A1 sowie WO 2018/024952 A1 ist jeweils ein Arbeitsgerät mit einem von einem Auslegerarm an einem Traktor gehaltenen Abeitskopf bekannt, bei dem im einen Fall die Stellelemente zum Verstellen des Auslegerarmes elektrisch betrieben sind.

Ferner zeigt die WO 2016/097784 A1 einen baggerarm, bei dem die Stellelemente zum Bewegen des Baggerarmes elektrisch betrieben sind.

### III. Darstellung der Erfindung

### a) Technische Aufgabe

Es ist daher die Aufgabe gemäß der Erfindung, eine Arbeitsgerät und insbesondere ein damit ausgestattetes Trägerfahrzeug zur Verfügung zu stellen, welches gegenüber den bekannten Bauformen weniger Energie verbraucht und/oder eine höhere Effizienz, insbesondere eine höhere Arbeitsgeschwindigkeit erlaubt und insbesondere leichter als bisherige Lösungen ausgebildet ist.

Es besteht ferner die Aufgabe, unterschiedliche Varianten eines solchen Arbeitsgerätes sehr einfach herstellen zu können.

Eine weitere Aufgabe besteht darin, ein solches Arbeitsgerät, insbesondere ein damit ausgestattetes Trägerfahrzeug, besonders energieeffizient betreiben zu können.

### b) Lösung der Aufgabe

Diese Aufgabe wird durch die Merkmale der Ansprüche 1 und 14 gelöst. Vorteilhafte Ausführungsformen ergeben sich aus den Unteransprüchen. Hinsichtlich des Arbeitsgerätes wird diese Aufgabe dadurch gelöst, dass bei einem gattungsgemäßen Arbeitsgerät gemäß dem Oberbegriff des Anspruchs 1 der am Arbeitskopf angeordnete Kopf-Motor für das Antreiben eines Arbeits-Elementes ein Elektromotor ist, und dementsprechend über elektrische Leitungen mit einer Energiequelle in Form eines elektrischen Generators, einer elektrischen Batterie oder eines elektrischen Anschlusses zum Anschließen an eine externe Stromquelle wie etwa das Bordnetz des Trägerfahrzeuges, welches das Arbeitsgerät trägt, oder eine Kombination aus diesen elektrischen Energiequellen ist.

Das Arbeitselement ist in aller Regel ein rotierend antreibbares Arbeitselement wie etwa eine Kopfwelle oder eine Messerwelle, jedoch kommen auch in anderer Form antreibbare Arbeitselemente, wie etwa ein oszillierend angetriebener Mähbalken, gelegentlich zum Einsatz.

Die Verwendung eines Elektromotors hat den Vorteil, dass bei gleicher Dauerleistung gegenüber dem ansonsten an dieser Stelle verwendeten Hydraulikmotor der Elektromotor kleiner und leichter ist, und zusätzlich für kurze Zeit eine gegenüber seiner Dauerleistung wesentlich höhere, in der Regel doppelt so hohe, Spitzenleistung abgeben kann.

Das geringere Gewicht und die geringere Größe bewirken eine Reduzierung der im Arbeitseinsatz zu beschleunigenden, zu bewegenden und zu positionierenden Masse des Arbeitsgerätes, was zum einen die Genauigkeit der Steuerbarkeit des Arbeitsgerätes verbessert, vor allem jedoch die Belastung der Befestigungs-vorrichtung, insbesondere des Auslegerarmes, reduziert, die dadurch weniger massiv ausgebildet werden muss.

Die zur Verfügung stehende höhere Spitzenleistung bewirkt, dass bei kurzfristig höherem Energiebedarf - bei einem Mähgerät beispielsweise dann, wenn über eine kurze Strecke sehr widerstandsfähiges Mähgut wie dickes Gestrüpp gemäht werden muss - die Spitzenleistung des Elektromotors abgerufen werden kann, ohne die Fahrtgeschwindigkeit des Arbeitsgerätes, also des Trägerfahrzeuges, reduzieren zu müssen, was eine insgesamt höhere Flächenleistung des Arbeitsgerätes ergibt.

Vorzugsweise umfasst das Arbeitsgerät auch derartige Sensoren, dass die Steuerung aufgrund der Signale dieser Sensoren vorab in der Lage ist, die in Kürze benötigte, vom elektrischen Kopf-Motor benötigte, Leistung zu berechnen oder abzuschätzen, und entsprechende Maßnahmen zu ergreifen, beispielsweise Zusteuerung von elektrischer Energie aus der Pufferbatterie und im Extremfall Herabsetzen der Fahrgeschwindigkeit des Trägerfahrzeuges und/oder Erhöhen der Drehzahl des den elektrischen Generator des Arbeitsgerätes antreibenden Fahr-Motors des Trägerfahrzeuges.

Dadurch wird ein möglichst gleichmäßiges und effizientes Bewältigen der Arbeit des Arbeitsgerätes und Trägerfahrzeuges ermöglicht.

Der Kopf-Motor ist dabei am Kopf angeordnet und mit der Kopfzeile beispielsweise über einen Riemenantrieb oder einen Kettenantrieb verbunden, vorzugsweise jedoch fluchtend und insbesondere direkt auf der Kopfwelle des Arbeitskopfes angeordnet und mit dieser drehfest verbunden, wodurch die Befestigung vereinfacht wird und der Arbeitskopf besonders kompakt wird. Im Idealfall ist kein Getriebe zwischen dem elektrischen Kopf-Motor und dem Arbeitselement, wie etwa der Messerwelle, vorhanden.

Falls der elektrische Kopf-Motor - abhängig von seiner Leistung - eine Flüssigkeitskühlung aufweist, ist der Kühler möglichst nah und vor Beschädigungen geschützt zum elektrischen Kopf-Motor angeordnet, um die Länge der Kühlmittel-Leitungen zwischen Kühler und Kopf-Motor gering zu halten und damit deren Beschädigungsrisiko. Die Anordnung eines Flüssigkeits-Kühlers direkt am Arbeitskopf ist jedoch sowohl technisch als auch unter dem Gesichtspunkt des Beschädigungs-Risikos sehr problematisch.

Wenn das Arbeitsgerät einen elektrischen Generator umfasst, weist das Arbeitsgerät in aller Regel auch einen bewegbaren, insbesondere drehbaren, Antriebsstutzen auf, der mechanisch mit dem Generator wirkverbunden ist und diesen antreiben kann, und andererseits so ausgebildet und angeordnet ist, dass er vom Trägerfahrzeug aus mechanisch angetrieben werden kann.

Um die zu bewegenden und beschleunigenden Massen des Arbeitsgerätes gering zu halten, sind mehrere Anordnungsmöglichkeiten für den Generator möglich:
Der elektrische Generator könnte - was technisch und aus Gewichtsgründen nur schwer darstellbar ist - an der Befestigungsvorrichtung für den Arbeitskopf angeordnet sein, und wenn diese einen Auslegerarm umfasst, vorzugsweise an der Befestigungsbasis für den Auslegerarm, die zur Befestigung am Trägerfahrzeug vorgesehen ist.

Dort, also beispielsweise an der Befestigungsbasis, ist dann eine Anschlussvorrichtung, insbesondere eine Anschlussaufnahme, vorhanden, die zum Aufstecken auf eine Zapfwelle, insbesondere die üblicher Weise vorhandene Front-Zapfwelle oder Heck-Zapfwelle eines Trägerfahrzeuges - je nach Befestigungsort des Arbeitsgerätes am Trägerfahrzeug - ausgebildet ist und mechanisch vom Trägerfahrzeug angetrieben wird.

Bei dieser Variante ist der Generator Bestandteil der Befestigungsvorrichtung des Arbeitsgerätes und muss beim Montieren des Arbeitsgerätes an einem Trägerfahrzeug nicht separat am Trägerfahrzeug montiert werden.

Es kann jedoch alternativ auch sinnvoll sein, den Generator abseits von der Befestigungsvorrichtung separat am Trägerfahrzeug, insbesondere in der Nähe von dessen Fahr-Motor, anzuordnen, und insbesondere wie andere Nebenaggregate des Fahr-Motors über ein umlaufendes Zugelement wie etwa einen Riemen oder eine Kette vom Fahrmotor aus anzutreiben.

Dies erhöht den Montageaufwand beim Anbauen des Arbeitsgerätes am Trägerfahrzeug, es sei denn, dass dieser Generator für die Stromversorgung des Arbeitsgerätes dauerhaft am Trägerfahrzeug verbleibt.

Der Vorteil ist jedoch, dass das Gewicht der Befestigungsvorrichtung und damit des gesamten Arbeitsgerätes, welches ja in der Regel ganz vorne oder weit hinten am Trägerfahrzeug befestigt ist, dadurch gering gehalten wird und damit die einseitige Gewichtsbelastung außerhalb des Achs-Zwischenraumes.

Ein solcher elektrischer Generator kann den elektrischen Kopf-Motor direkt speisen, wobei dann die aktuelle Leistungsaufnahme des elektrischen Kopf-Motors begrenzt ist auf die aktuelle Leistungs-Abgabe des elektrischen Generators.

Um die Spitzenleistung des elektrischen Kopf-Motors abrufen zu können, müsste hierfür der elektrische Generator entsprechend leistungsstark ausgelegt und damit entsprechend groß und schwer sein.

Um dies zu vermeiden, ist vorzugsweise zusätzlich zumindest eine kleindimensionierte Pufferbatterie vorhanden, während der Generator hinsichtlich seiner Leistung lediglich so groß dimensioniert ist, dass er die Dauerleistung des elektrischen Kopf-Motors zur Verfügung stellen kann.

Die benötigte elektrische Zusatzleistung, um die Spitzenleistung des Kopf-Motors abrufen zu können, wird dann von der Pufferbatterie und/oder elektrischen Puffer-Kondensatoren zur Verfügung gestellt, die während des Betriebes hierfür natürlich nach Möglichkeit immer vollständig geladen gehalten wird.

Dementsprechend kann vorzugsweise der Generator den erzeugten elektrischen Strom wahlweise an den elektrischen Fahr-Motor oder die Pufferbatterie liefern oder den von ihm erzeugten elektrischen Strom zwischen beiden verteilen je nach aktuellem Leistungsbedarf des elektrischen Kopf-Motors.

Analog kann der Kopf-Motor wahlweise elektrische Energie nur vom Generator oder zusätzlich auch aus der Pufferbatterie beziehen oder notfalls auch nur aus dem Pufferbatterie beziehen.

Die Verschaltung zwischen diesen drei Elementen kann auch so gestaltet sein, dass der Generator den erzeugten Strom ausschließlich an die Pufferbatterie liefert, und der elektrische Kopf-Motor den benötigten Strom ausschließlich aus der Pufferbatterie oder den Pufferkondensatoren bezieht, was jedoch spezifische Eigenschaften und eine erhöhte Belastung der Pufferbatterie zur Folge hat.

Je nach Größe und/oder Gewicht der Batterie kommen für diese unterschiedliche Anbringungspositionen in Frage:
Für die Funktion als reine Pufferbatterie oder als Pufferkondensator für den elektrischen Kopf-Motor wird die Batterie in der Regel eine Kapazität von höchstens 10 kW besitzen und damit ihr Gewicht und ihre Größe so gering sein, dass sie auch noch an der Befestigungsvorrichtung, insbesondere der Befestigungsbasis für den Auslegerarm, befestigt werden kann, da dies die Montierbarkeit des Arbeitsgerätes und Zugänglichkeit zur Pufferbatterie und auch deren Kühlung erleichtert, allerdings in geringem Maße die Frontlast oder Hecklast des Trägerfahrzeuges erhöht.

Ist die Batterie dagegen größer und schwerer dimensioniert, da sie zusätzliche Versorgungs-Aufgaben übernehmen können muss, wird sie vorzugsweise nicht an der Befestigungsvorrichtung positioniert, sondern separat hiervon am Trägerfahrzeug befestigt, vorzugsweise in dem dem Befestigungsort des Arbeitsgerätes gegenüberliegenden, vorderen oder hinteren, Endbereich des Arbeitsfahrzeuges. Denn dort ist in aller Regel bei einem Trägerfahrzeug, welches nur ein Arbeitsgerät, beispielsweise frontseitig, trägt, ein Gegengewicht vorhanden, um die Kopflastigkeit des Trägerfahrzeuges zu verringern. Die Batterie dient dann als ein solches Gegengewicht.

Bei einer sehr großen Batterie wird diese vorzugsweise - bei Anordnung im hinteren Bereich - auf der hinteren Ladefläche angeordnet.

Eine besonders große Batterie ist insbesondere dann notwendig, wenn sie nicht nur weitere anzutreibende Elemente des Arbeitsgerätes mit elektrischer Energie versorgen soll, wie etwa Stellelemente für den Auslegerarm, sondern vor allem dann, wenn über eine solche Versorgungsbatterie auch ein elektrischer Fahrantrieb des Trägerfahrzeuges möglich sein soll, dessen Fahrantrieb dann natürlich zumindest einen Elektromotor im Rahmen eines Hybridantriebes umfassen muss, oder auch nur einen Elektromotor als Fahr-Motor für einen elektrischen Antrieb des Trägerfahrzeuges.

Je nach Anwendungszweck des Arbeitsgerätes kann dies sinnvoll sein, um die Geräuschemissionen und/oder Abgasemissionen des Arbeitsfahrzeuges zu minimieren, wenn damit beispielsweise nachts in Wohngebieten gearbeitet werden soll.

Da vor allem das Volumen einer solchen Versorgungsbatterie - bei Unterbringung auf der Ladefläche des Trägerfahrzeuges - kaum begrenzt ist, und das Trägerfahrzeug selbst in der Regel keine großen Beschleunigungen bewältigen muss, ist das sich dadurch ergebende erhöhte Gesamtgewicht des Trägerfahrzeuges möglicherweise akzeptabel, um die dadurch erreichbaren Vorteile nutzen zu können.

Bei einem elektrischen Fahrantrieb des Trägerfahrzeuges ist dann in aller Regel am Trägerfahrzeug selbst ohnehin eine solche Versorgungsbatterie vorgesehen, die dann entweder zusätzlich als Pufferbatterie oder Versorgungsbatterie für das Arbeitsgerät genutzt werden kann oder zu diesem Zweck erweitert werden kann.

Der Fahr-Antrieb des Trägerfahrzeuges kann insbesondere auch ein Hybrid-Fahrantrieb sein, insbesondere ein so genannter Leistungsverzweigter oder paralleler Hybrid-Fahrantrieb und der Antrieb des Trägerfahrzeuges über Elektromotore erfolgen, wobei ein Verbrennungsmotor, der immer im optimalen Betriebszustand läuft und keine mechanische Verbindung zu dem Fahrantrieb des Trägerfahrzeuges besitzt, lediglich zum Antreiben eines Zentral-Generators dienen, der die große Versorgungs-Batterie lädt, welche sowohl den elektrischen Fahrantrieb des Trägerfahrzeuges als auch die elektrischen Verbraucher des Arbeitsgerätes mit elektrischem Strom versorgt.

Die Befestigungsvorrichtung umfasst Insbesondere eine Befestigungsbasis, die am Trägerfahrzeug befestigt wird, und von der der Rest des Arbeitsgerätes getragen wird, und bei Vorhandensein eines Auslegerarmes der Auslegerarm getragen wird.

Vorzugsweise ist dabei der Auslegerarm mit seinem fahrzeugseitigen Ende in Querrichtung entlang der Befestigungsbasis verfahrbar entlang einer dort in Querrichtung verlaufenden Querversatzschiene, an dem dann der Auslegerarm befestigt ist.

Für das Bewegen des Schlittens ist eine Antriebsquelle notwendig, und wenn die Befestigungsvorrichtung für den Arbeitskopf in irgendeiner Art und Weise beweglich ist, was praktisch immer der Fall ist, insbesondere die Armteile eines vorhandenen Auslegerarmes relativ zueinander verstellt werden müssen, sind auch hierfür Stellelemente notwendig, die einen Antrieb benötigen.

Diese Neben-Antriebe des Arbeitsgerätes sind bisher in aller Regel hydraulisch angetrieben, indem beispielsweise die Stellelemente zum Einstellen der Armteile des Auslegerarms zueinander Hydraulikzylinder sind.

Für die Versorgung dieser Nebenantriebe stehen ebenfalls mehrere Möglichkeiten zur Verfügung:
Entweder werden diese wie bisher hydraulisch angetrieben, sodass also jeder Neben-Antrieb des Arbeitsgerätes über einen eigenen kleinen Hydraulikmotor verfügt, das Hydraulikmedium hierfür wird dann jedoch vorzugsweise dem hydraulischen Bordnetz des Trägerfahrzeuges entnommen, wofür das Arbeitsgerät einen entsprechenden Hydraulik-Anschluss aufweist. Dadurch wird eine eigene Hydraulik-Pumpe als Bestandteil des Arbeitsgerätes vermieden.

Diese Neben-Antriebe können jedoch auch elektrisch angetrieben werden, indem sie jeweils einen zum Beispiel Elektromotor oder einen Elektromagneten - wenn nur zwei Schaltstellungen wahlweise angefahren werden müssen - umfassen.

Diese elektrischen Neben-Antriebe können dann - da sie nur eine relativ geringe Leistung benötigen - wahlweise entweder vom elektrischen Bordnetz des Trägerfahrzeuges aus mit elektrischer Energie versorgt werden, wofür dann ein entsprechender Elektroanschluss am Arbeitsgerät vorhanden sein muss, oder vom eigenem elektrischen Netz des Arbeitsgerätes, wie zuvor beschrieben bestehend aus einem eigenen Generator und/oder einer eigenen Batterie.

Welche Variante hier gewählt wird, hängt primär von Steuerungs- und Montage-Fragen ab.

Die Steuerung ist Vorzugsweise in der Lage, den Kopf-Motor hinsichtlich seiner Drehrichtung umzuschalten, was bei bestimmten Arbeitsaufgaben sehr hilfreich sein kann.

Ferner ist die Steuerung in der Lage, den elektrischen Kopf-Motor im Falle eines Notstopps sehr schnell anzuhalten, vorzugswese in weniger als 4 Sekunden, vorzugsweise in weniger als 3 oder gar 2 Sekunden. Gerade bei einem unerwartet aufgetretenen Hindernis, mit dem der Arbeitskopf in Kontakt geraten ist, ist dies extrem wichtig.

Hinsichtlich des Arbeitsfahrzeuges wird diese Aufgabe dadurch gelöst, dass das Arbeitsfahrzeug einerseits ein Trägerfahrzeug umfasst und andererseits das beschriebene, am Trägerfahrzeug befestigte, Arbeitsgerät.

Vorzugsweise besitzt zu diesem Zweck das Trägerfahrzeug die für die zuvor beschriebenen Zwecke erwähnten Anschlüsse:
Einerseits wenigstens ein angetriebenes mechanisches Element, welches insbesondere vom Fahrmotor des Trägerfahrzeuges angetrieben wird, insbesondere eine Front-Zapfwelle und/oder Heck-Zapfwelle und/oder eine vom Fahr-Motor angetriebene z.B. Riemenscheibe.

Alternativ kann das Arbeitsgerät als Energiequelle jedoch über einen eigenen, vom Fahrmotor separaten, Motor, insbesondere Verbrennungsmotor, insbesondere Dieselmotor der Gasmotor, verfügen.

Weiterhin kann ein elektrischer Anschluss zum elektrischen Bordnetz, insbesondere dem elektrischen Hochvolt-Bordnetz, des Trägerfahrzeuges sehr hilfreich sein, um das Arbeitsgerät daran anzuschließen und insbesondere die elektrischen Antriebe des Arbeitsgerätes mit geringerem Leistungsbedarf, also außerdem elektrischen Kopf-Motor, des Arbeitsgerätes hierüber zu versorgen.

Ebenso kann ein Hydraulikanschluss zu dem hydraulischen Bordnetz des Trägerfahrzeuges aus dem gleichen Grund hilfreich sein, um nach wie vor hydraulisch betriebene Neben-Antriebe, also abgesehen vom Kopf-Antrieb des Arbeitsgerätes, mit hydraulischer Energie zu versorgen.

Um die Steuerung des Arbeitsgerätes mit der Steuerung des Trägerfahrzeuges zu koppeln, kann ein Steuerungsanschluss zu der Fahrsteuerung des Trägerfahrzeuges am Trägerfahrzeug sehr hilfreich sein.

Wie aus der obigen Beschreibung hervorgeht, kann das Arbeitsgerät unterschiedlich konfiguriert sein und unterschiedliche Bauteile umfassen, die auch an unterschiedlichen Positionen untergebracht sein können und unterschiedlich ausgebildet sein können, wobei die konkrete Ausgestaltung des Arbeitsgerätes jeweils vom vorliegenden Anwendungsfall abhängt.

Deshalb ist es sinnvoll, einen Baukasten zur Verfügung zu stellen, der die unterschiedlichen Bauteile, gegebenenfalls in unterschiedlichen Konfigurationen, zur Verfügung stellt und aus dem das konkret gewünschte Arbeitsgerät in einer sehr großen Anzahl von Varianten hergestellt werden kann.

Ein solcher Baukasten umfasst in seiner Minimalausstattung
- mehrere Sorten eines Arbeitskopfes, zum Beispiel einen Mähkopf einerseits und einen Bürstenkopf, also mit einer rotierenden Bürste, andererseits oder auch unterschiedlich große Mähköpfe oder nach unterschiedlichen Mähprinzipien (Kreiselmäher gegenüber Messerwelle) funktionierende Mähköpfe,
- mindestens eine Sorte einer Befestigungsvorrichtung zum Befestigen des Arbeitskopfes an einem bestimmten Trägerfahrzeug,
- mindestens eine Sorte, vorzugsweise mehrere Sorten, eines elektrischen Kopf-Motors, wie sie für die unterschiedlichen Sorten von Arbeitsköpfen eingesetzt werden können und sich sowohl hinsichtlich der Leistung als auch des inneren konstruktiven Aufbaus als auch der Kopplungselemente zum Arbeitskopf hin, also auf der Abtriebsseite des Kopf-Motors, unterscheiden können.

Vorzugsweise umfasst die Befestigungsvorrichtung wie bekannt einen Auslegerarm, an dessen äußeren Ende der Arbeitskopfes befestigt ist und der mit seinem inneren Ende an einer Befestigungsbasis, die Teil der Befestigungsvorrichtung ist, gehalten ist.

Der Baukasten kann auch mehrere Sorten eines Auslegerarmes umfassen, die sich insbesondere hinsichtlich ihrer Anzahl der Armteile, Ausleger-Länge, Belastbarkeit des Auslegerarmes oder anderer Faktoren voneinander unterscheiden können.

Vorzugsweise umfasst der Baukasten auch mehrere dieser Befestigungsbasen, beispielsweise mit oder ohne Querversatzschiene, für die Frontbefestigung oder Heckbefestigung und/oder ausgelegt für unterschiedliche Trägerfahrzeuge.

Der Baukasten umfasst ferner vorzugsweise mehrere Sorten von Elektro-Leitungen, die sich hinsichtlich Länge oder Querschnitt der Leitung unterscheiden können, passend zu dem jeweils verwendeten Kopf-Motor und der Art, insbesondere Auskragungslänge, der Befestigungsvorrichtung, und auf dem von dem Kopf-Motor abgewandten Ende auch hinsichtlich der Art des Kopplungselementes abhängig davon, womit die elektrische Leitung verbunden werden soll.

Der Baukasten umfasst ferner vorzugsweise mindestens eine Sorte einer elektronischen Steuerung, die zumindest alle beweglichen Teile des Arbeitsgerätes steuert und auch mit eventuell vorhandenen Sensoren signaltechnisch in Verbindung stehen kann.

Der Baukasten umfasst vorzugsweise auch mehrere Sorten von Anschlussvorrichtungen, um das Arbeitsgerät hinsichtlich Energieversorgung und datentechnischer Verbindung mit dem Trägerfahrzeug zu verbinden, also insbesondere elektrische, hydraulische und/oder signaltechnische Kupplungen.

Je nachdem, wie viele verschiedene Varianten des Arbeitsgerätes aus dem Baukasten herstellbar sein sollen, kann dieser erweitert werden:
Falls die elektrische Versorgung des elektrischen Kopf-Motors oder anderer Verbraucher des Arbeitsgerätes durch vom Arbeitsgerät selbst erzeugten Strom versorgt werden soll, umfasst das Arbeitsgerät mindestens eine Sorte eines Generators, und dann wenigstens auch eine Sorte von Halterungen zum Befestigen des Generators, entweder am Arbeitsgerät oder an einer vorgesehenen Stelle des Trägerfahrzeuges.

Gleiches gilt für die gegebenenfalls im Baukasten enthaltenen Batterien, die hinsichtlich Größe und Kapazität auch mehrere Sorten umfassen können, und dann auch mehrere Sorten von Halterungen zum Befestigen der Batterien, entweder am Arbeitsgerät oder an einer vorgesehenen Position des Trägerfahrzeuges, benötigt werden.

Der Baukasten umfasst vorzugsweise auch eine, besser mehrere, Sorten eines beweglichen, insbesondere drehbaren, Antriebsstutzens zum mechanischen, insbesondere formschlüssigen, Anschließen eines vom Trägerfahrzeug, insbesondere dessen Fahr-Motor, angetriebenen Antriebs-elementes wie etwa einer Zapfwelle oder einer Riemenscheibe.

Vorzugsweise umfasst der Baukasten, für die elektrischen Leitungen wenigstens auf der Fahrzeugseite wenigstens eine Sorte eines Kupplungselementes, welches neben der Kupplung für die elektrische Leitung auch Kupplungen für Hydraulikleitungen und/oder für elektrische Signal-Leitungen umfasst.

Ferner kann der Baukasten wenigstens eine Sorte, vorzugsweise mehrere Sorten, von Sensoren umfassen, die am Arbeitskopf oder an der Befestigungs-vorrichtung angeordnet werden können, um dort einwirkende Kräfte/Drücke/Beschleunigungen/Vibrationen und/oder Neigungen zu detektieren und an die Steuerung zu melden. Dazu zählen auch Sensoren, die zum berührungslosen, insbesondere optischen, Abtasten der Umgebung des Arbeitskopfes, insbesondere des Untergrundes in Fahrtrichtung vor dem Arbeitskopf, dienen, ebenso wie die bereits seit langem bekannten mechanischen, tastenden Sensoren wie etwa Taststangen.

Hinsichtlich eines Verfahrens zum Betreiben zumindest des an dem Trägerfahrzeug angebauten Arbeitsgerätes, insbesondere des gesamten Arbeitsfahrzeuges, wird diese Aufgabe für die unterschiedlichen Arbeitssituationen wie folgt gelöst:
Erkennt die Steuerung einen erhöhten Leistungsbedarf des elektrischen Kopf-Motors, vorzugsweise, wenn die Steuerung dies vorab erkennt, erhöht die Steuerung das Drehmoment und/oder die Drehzahl des Kopf-Motors vorzugsweise noch vor dem Auftreten des erhöhten Leistungsbedarfs, insbesondere durch Zufuhr von zusätzlicher Energie aus der Batterie zusätzlich zu der vom Generator gelieferten Batterie.

Die Steuerung kann damit die Leistung des Kopfmotors kurzzeitig über dessen Dauerlast hinaus bis zur Spitzenlast erhöhen, sodass die Drehzahl der Messerwelle im Wesentlichen konstant gehalten werden kann und damit auch der Mähfortschritt, also die Fahrgeschwindigkeit des Trägerfahrzeuges.

Gleiches gilt, wenn die Drehzahl des Kopf-Motors - vorzugsweise eben aufgrund einer bereits eingetretenen gestiegenen Belastung - abgesunken ist: Auch dann führt die Steuerung dem Kopf-Motor zusätzliche Energie, vorzugsweise aus der Pufferbatterie, zu, bis sich die Drehzahl des Kopf-Motors wieder oberhalb eines ersten Grenzwertes befindet.

### c) Ausführungsbeispiele

Ausführungsformen gemäß der Erfindung sind im Folgenden beispielhaft näher beschrieben. Es zeigen:
- Figur 1:: das Arbeitsgerät montiert an einem Trägerfahrzeug im Arbeitseinsatz,
- Figur 2:: den Gegenstand gemäß Figur 1 in der Aufsicht von oben,
- Figur 2.1:: eine Ausschnittvergrößerung aus Figur 2,
- Figur 3:: den Gegenstand der Figuren 1 und 2 in der Seitenansicht,
- Figur 3.1:: eine Ausschnittvergrößerung aus Figur 3,
- Figur 4:: eine Prinzipdarstellung eines Parallel-Hybridantriebes.

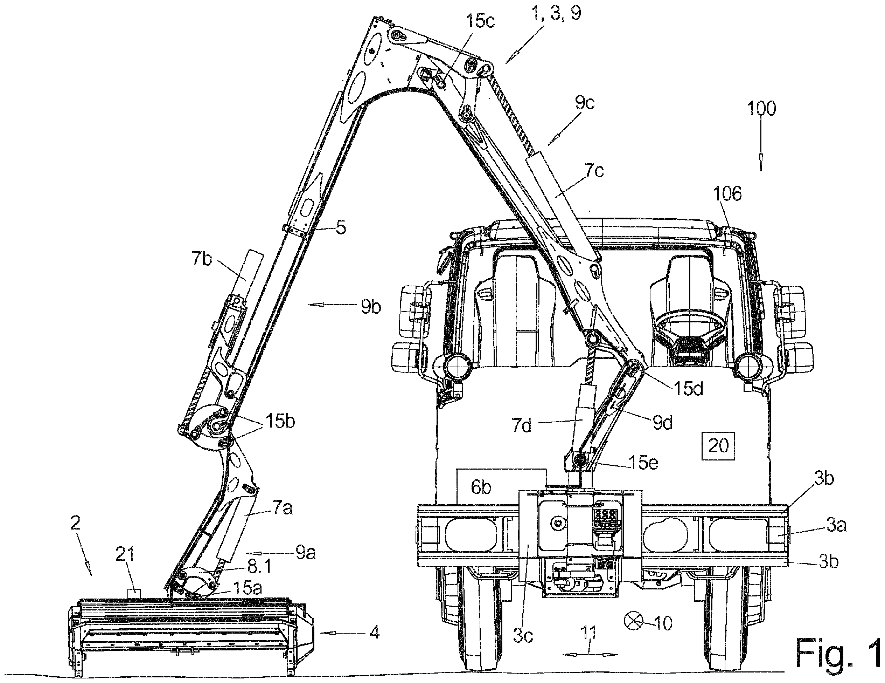

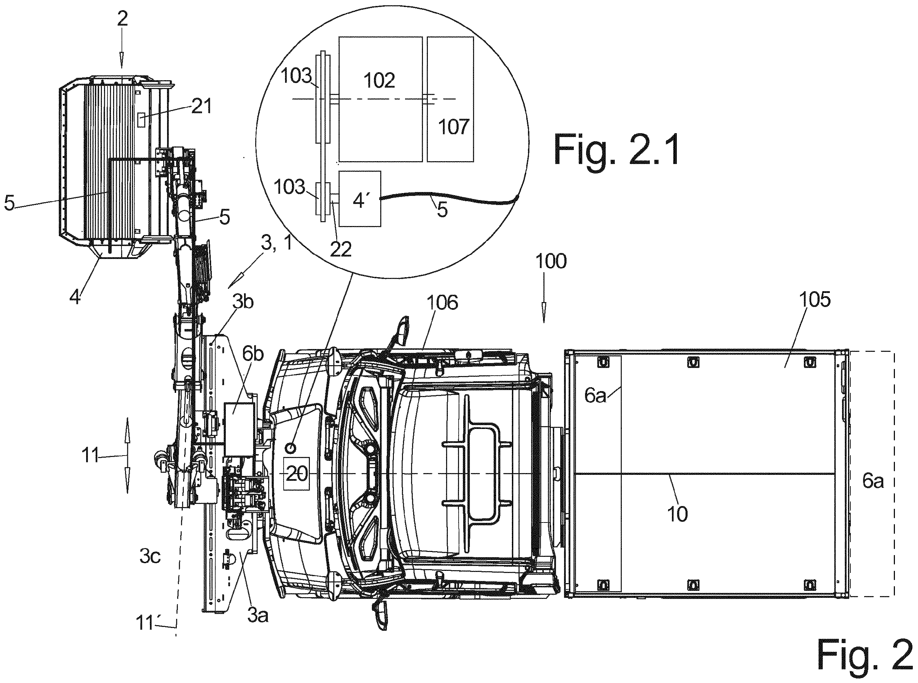

Die **Figuren 1****,** **2** **und** **3** zeigen ein Arbeitsgerät in Form eines Mähgerätes 1 montiert an der Front eines Unimog - hinter dessen Fahrerkabine 106 sich eine Ladefläche 105 befindet - als Trägerfahrzeug 100.

Wie bekannt, ist dabei der Arbeitskopf 2, in diesem Fall eine Mähkopf 2, am vorderen, freien Ende eines Auslegerarmes 9 angeordnet, der als Befestigungsvorrichtung 3 des Mähkopfes 2 am Trägerfahrzeug 100 dient.

Das fahrzeug-seitige Ende des Auslegerarmes 9 ist zu diesem Zweck an einem Schlitten 3c befestigt, der in Querrichtung 11 zur Längsrichtung 10 des Trägerfahrzeuges 100, also meist dessen Fahrtrichtung 10, an einer in dieser Querrichtung 11 verlaufenden Querversatz-Schiene 3b verfahrbar ist, die an der Vorderseite einer Befestigungsbasis 3a angeordnet ist, welche vor der Front des Trägerfahrzeuges 100 angeordnet und an diesem befestigt ist.

Die Querversatz-Schiene 3b - konkret handelt es sich um zwei übereinander im Abstand angeordnete Querversatz-Führungen - erstreckt sich im Wesentlichen über die gesamte Breite der Front des Trägerfahrzeuges 100 und vorzugsweise sogar geringfügig darüber hinaus.

Der Auslegerarm 9 ist mit seinem fahrzeug-seitigen Ende auf der Oberseite des Schlittens 3c befestigt und gegenüber diesem um eine aufrechte Achse drehbar.

Der Auslegerarm 9 besteht wie bekannt aus mehreren jeweils über mindestens ein Gelenk 15a bis 15e miteinander verbundenen Armteilen 9a bis 9b, die jeweils um parallel zueinander verlaufende, quer zur Erstreckungsrichtung dieser etwa stangenförmigen Armteile 9a bis 9d verlaufende Schwenkachsen gegeneinander verschwenkbar sind.

Das Verschwenken sowie Halten der gewünschten Schwenkstellung wird jeweils bewirkt durch ein Stellelement 7a bis 7d, bisher üblicherweise einem hydraulisch betriebenen Arbeitszylinder, welcher exzentrisch zur jeweiligen Schwenkachse mit einem Ende an je einem der beiden gegeneinander verschwenkbaren Armteile angreift, entweder direkt oder über ein Zwischengestänge.

Einer der Armteile, in diesem Fall der Armteil 9b, kann dabei auch teleskopierbar ausgebildet sein.

Am vorderen Ende dieses Auslegerarmes 9 ist der Mähkopf 2 gelenkig so befestigt, dass er gegenüber dessen freien Ende sowohl um eine parallel zu den anderen Schwenkachsen des Auslegerarmes 9 verlaufende Schwenkachse in seiner Neigung verstellbar ist, als auch um eine aufrechte Achse drehbar ist.

Der Auslegerarm 9 greift mit seinem vordersten, äußersten Armteil 9a etwa in Querrichtung 11 in der Mitte im hinteren Bereich des Mähkopfes 2 an diesem an, wobei der Angriffspunkt in Querrichtung 11 verlagerbar ist entlang einer am Mähkopf 2 befestigten Querschiene.

In der dargestellten Arbeitsstellung ragt - in der Frontansicht der **Figur 1** betrachtet - der Auslegerarm 9 von dem Schlitten 3c aus Torbogen-förmig nach oben und zur Seite, so dass sich der Mähkopf 2 seitlich versetzt zum Trägerfahrzeug 100 und vor dessen Front knapp über dem Untergrund befindet oder auf diesem aufliegt.

Der Mähkopf 2 enthält ein rotierende Mäh-Element, in diesem Fall eine Messerwelle, deren Rotationsachse entlang der etwa in Querrichtung 11 verlaufenden Erstreckungsrichtung des Mähkopfes 2 verläuft, und die von einem Kopfmotor 4 angetrieben wird, welcher an einen der seitlichen Enden des Gehäuses des Mähkopfes 2 montiert ist.

Um den Kopfmotor 4 mit Energie zu versorgen, verlaufen Energie-Leitungen 5 von der Befestigung-Basis 3a aus entlang der Armteile 9a bis 9d des Auslegerarmes 9 bis zum Kopfmotor 4, und sind mit einer oder mehreren der Energiequellen verbunden, von dem aus die sowohl für den Kopfmotor 4 als auch für die Stellelemente 7a bis 7d benötigte Energie eingespeist wird.

Bei den bekannten Lösungen war der Kopfmotor 4 ein hydraulisch angetriebener Motor, und die Energieleitungen 5 waren Hydraulikleitungen, mit Abzweigungen oder auch separaten Leitungen auch zu den Stellelementen 7a bis 7d, die Hydraulikzylinder waren.

Erfindungsgemäß ist der Kopfmotor 4 ein Elektromotor und dementsprechend sind die Energie-Leitungen 5 Elektro-Leitungen, in den **Figuren 1****,** **2****,** **3** vereinfacht dargestellt als ein einziges Elektro-Kabel 5.

Optional können auch die Stellelemente 7a bis 7d elektrisch betriebene Stellelemente sein, beispielsweise wie dargestellt Gewindespindel-Einheiten, bei denen eine in einer Hülse oder einem Zylinder aufgenommene und drehbar gelagerte, in den Figuren nicht sichtbare, Mutter mit der Gewindespindel kämmt und durch Drehung deren axiale Ausfahrlänge verändert.

Die in das Kabel 5 eingespeist elektrische Energie kann aus unterschiedlichen Energiequellen stammen, von denen nur eine einzige oder mehrere parallel vorhanden und am Arbeitsgerät 1 oder am Trägerfahrzeug 100 montiert bzw. ausgebildet sein können.

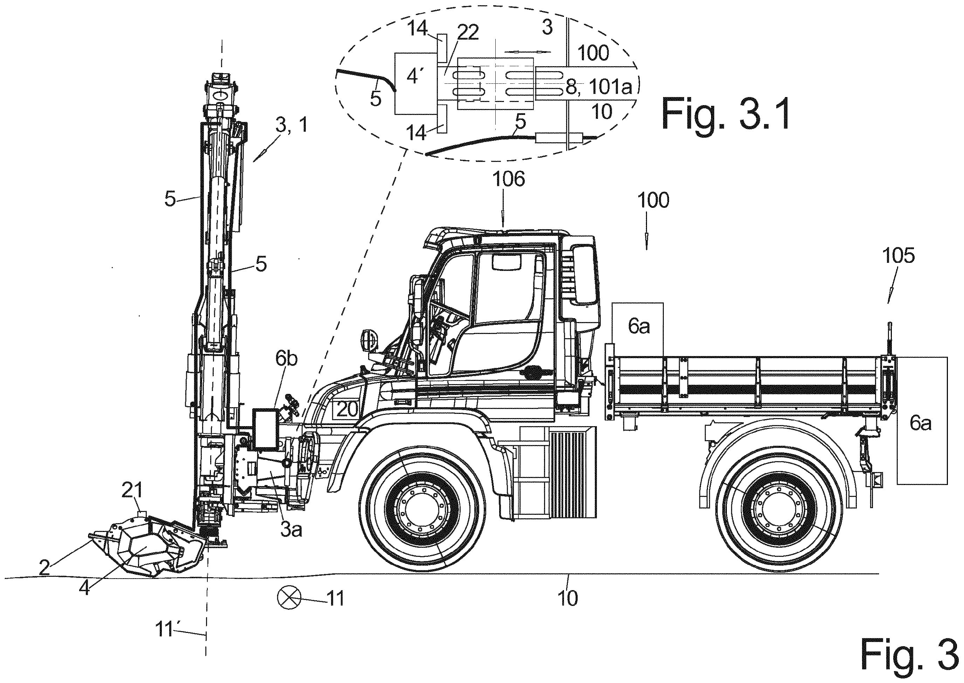

Eine 1. Möglichkeit besteht - wie in **Figur 3****.****1** dargestellt - darin, dass das Arbeitsgerät 1, hier Mähgerät 1, über einen elektrischen Generator 4' verfügt, der mit dem Kabel 5 am fahrzeugseitigen Ende verbunden ist und die benötigte elektrische Energie erzeugt. Der Generator 4' ist dabei auf der Befestigungsbasis 3a mittels entsprechender Halterungen 14 befestigt und ist mechanisch angetrieben von einer Front-Zapfwelle 101 als Antriebsstutzen 8:
Selbstfahrende Trägerfahrzeuge wie ein Unimog, aber auch ein Traktor, besitzen zum mechanischen Antreiben von daran befestigten Arbeitsgeräten sowohl an der Front als auch am Heck eine meist in Längsrichtung 10 nach vorne bzw. hinten vorstehende Front-Zapfwelle 101 und/oder Heck-Zapfwelle 101, die vom Fahrmotor 102 des Trägerfahrzeuges 100 aus drehend antreibbar ist.

Durch mechanische Kopplung der Antriebswelle 16 des Generators 4' mit der Zapfwelle 101, beispielsweise mittels einer in Längsrichtung 10 verschiebbaren Kupplungs-Hülse 17 - die eine in Längsrichtung 10 verlaufende Innenumfangs-Profilierung aufweist, welche an den beidseitigen Enden so ausgebildet ist, dass sie einerseits mit der Außenumfang-Profilierung der Zapfwelle 101 und andererseits mit der Außenumfangs-Profilierung des Antriebswelle 16 formschlüssig durch Aufschieben koppelbar ist - kann der Generator 4' angetrieben werden für die Stromerzeugung.

Eine 2. Möglichkeit besteht darin, den Strom teilweise, primär oder ausschließlich aus einer Batterie 6 zur Verfügung zu stellen, beispielsweise aus einer entsprechend groß dimensionierten Versorgungs-Batterie 6a, die eine solche Kapazität besitzt, dass das Arbeitsgerät 1 damit über einen vorgesehenen Zeitraum, beispielsweise eine Schicht von 8 Stunden, mit Energie versorgt werden kann.

Eine solche Versorgungs-Batterie 6a ist in der Regel so groß, dass sie entweder auf der Ladefläche 105 des Trägerfahrzeuges 100 untergebracht werden muss oder am dem Arbeitsgerät 1 gegenüberliegenden Ende des Trägerfahrzeuges 100, also im dargestellten Fall am Heck des Trägerfahrzeuges 100, als Gegengewicht zum Trägerfahrzeug 100 befestigt wird und in jedem Fall natürlich auch mit dem Kabel 5 verbunden sein muss.

Anstelle einer solchen großen Versorgungsbatterie 6a kann auch eine wesentlich kleiner dimensionierte Puffer-Batterie 6b vorhanden sein, die dann vorzugsweise auf der Befestigungs-Basis 3a montiert ist und damit eine beim Anbauen und Abbauen des Arbeitsgerätes 1 keine separat handhabbare Einheit bildet, die separat mit dem Kabel 5 verbunden werden muss.

Der Generator 4' liefert dann den von ihm erzeugten Strom vorzugsweise immer in die Puffer Batterie 6b, oder kann nach wie vor zusätzlich direkt mit dem Kabel 5 verbunden sein, so dass die Puffer Batterie 6b - die immer geladen gehalten wird - lediglich dazu dient, aktuell benötigte besonders hohe elektrische Leistung zur Verfügung zu stellen, indem sie zusätzlich zum Generator 4' Strom an den Kopfmotor 4 liefert.

Derartige aktuell benötigte Spitzenleistungen können sogar vorab erkannt und dementsprechend rechtzeitig zur Verfügung gestellt werden mithilfe einer oder mehrerer Sensoren 21, die beispielsweise am Mähkopf 2 oder am Auslegerarm 9 befestigt sind, und das in Fahrtrichtung 10 vor dem Mähkopf liegende Mähgut detektiert, woraus die Steuerung 20 des Arbeitsgerätes 1 solche in Kürze benötigten hohen elektrischen Leistungen erkennen und den Generator 4' sowie das übrige elektrische System des Arbeitsgerätes 1 entsprechend ansteuern kann, gegebenenfalls sogar die Drehzahl, mit der der Generator 4' vom Trägerfahrzeug 100 aus angetrieben wird.

Statt an der Anordnung an der Befestigungsbasis 3a und des Antriebes über die Zapfwelle 101 kann ein solcher elektrischer Generator 4' auch im Motorraum des Trägerfahrzeuges 100 untergebracht sein, und dort vom Fahrmotor 102 angetrieben werden.

Zu diesem Zweck sind beispielsweise wie bekannt mindestens eine entsprechende Riemenscheibe 103 vorhanden, von denen eine drehfest mit dem Fahrmotor 102, vorzugsweise auf dessen von dem Getriebe 107 abgewandten Seite, angeordnet ist und eine andere Riemenscheibe 103 drehfest mit der Antriebswelle 16 des Generator 4', wobei beide über einen umlaufenden zum Beispiel Zahnriemen gekoppelt sind.

Eine Variante bezüglich des Fahrmotors 102 besteht auch darin, dass als Fahrmotor 102 des Trägerfahrzeuges 100 ein Elektromotor verwendet wird, und dieser Fahrmotor 102 ebenfalls von der dann noch größer dimensionierten Versorgungs-Batterie 6a versorgt wird. Dann werden natürlich auch alle elektrisch betriebenen Komponenten des Arbeitsgerätes 1 direkt aus dieser Versorgungs-Batterie 6a versorgt, so dass also kein Generator 4' für die Energieversorgung des Arbeitsgerätes 1 benötigt wird.

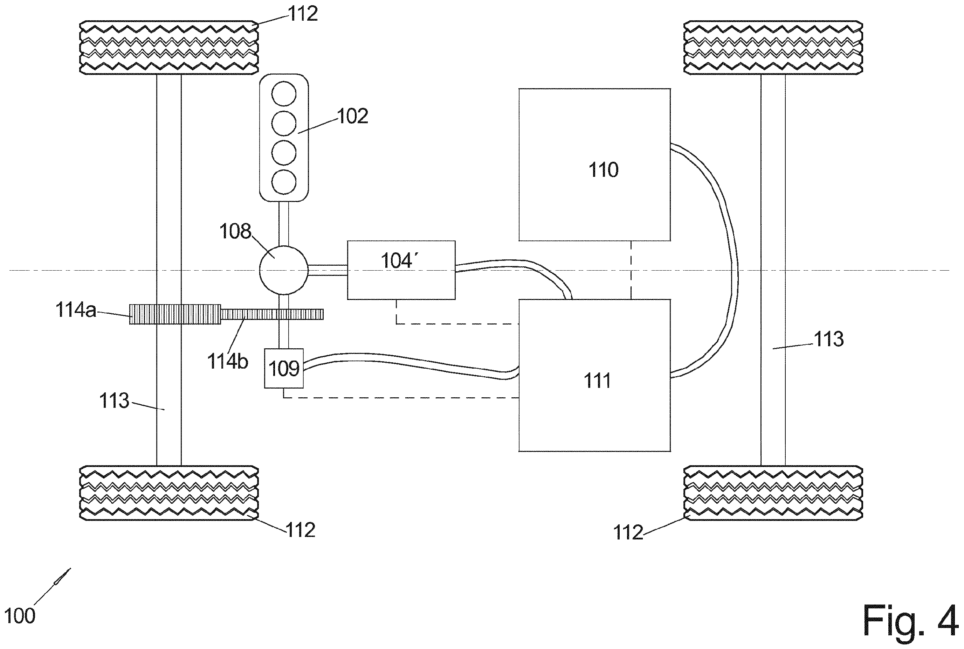

Figur 4 stellt in Prinzipdarstellung einen Parallel-Hybridantrieb dar, der auch als leistungsverzweigter Hybridantrieb bezeichnet wird, wie er als Fahrantrieb im Trägerfahrzeug 100 vorhanden sein kann.

In dieser Darstellung sind die beiden links dargestellten Räder 112, also die der Achse 113 zugeordneten Räder 112, angetrieben.

Dabei müssen die beiden angetriebenen Räder 112 nicht über eine durchgehende Welle gekoppelt sein, sondern es genügt wenn jedes der beiden Räder 112 mit dem Antriebsstrang mechanisch wirkverbunden ist.

Dabei steht sowohl die Kurbelwelle des Verbrennungsmotors 102 als auch die Motorwelle des Elektromotors 109 über entsprechende mechanische Antriebselemente wie etwa Antriebswellen in mechanischer Wirkverbindung mit den beiden angetriebenen Rädern 112. In der **Figur 4** sind diese Antriebselemente lediglich symbolhaft durch die beiden Zahnräder 114a und 114b wiedergegeben, von denen das erste Zahnrad 114a mit den angetriebenen Rädern 112 und das zweite Zahnrad 114b mit dem Antriebsstrang drehfest verbunden ist.

Zwischen dem Verbrennungsmotor 102 und dem Elektromotor 109 und mit beiden wirkverbunden ist ferner ein Kopplungsgetriebe 108, meist ein Planetengetriebe 108, angeordnet, welches auch mit einem elektrischen Generator 104' des Hybridantriebes in mechanischer Wirkverbindung steht.

Eine Leistungselektronik 111 für den elektrischen Teil des Hybridantriebes steht sowohl über Starkstrom-Kabel als auch über Signalleitungen einerseits mit dem Elektromotor 109, andererseits mit dem Generator 104' und auch mit der Batterie 110 in Verbindung.

Abhängig vom momentanen Leistungsbedarf und dem Füllstand der Batterie 110 regelt die Leistungselektronik 111, welcher Anteil des an den angetriebenen Rädern 112 benötigten Drehmomentes vom Verbrennungsmotor 102 einerseits und vom Elektromotor 109 andererseits zur Verfügung gestellt wird.

Des Weiteren regelt die Leistungselektronik 111, welcher Anteil der vom Verbrennungsmotor 102 gelieferten Leistung über das zweite Ritzel 114b den anzutreibenden Rädern 112 zur Verfügung gestellt wird oder dem Generator 104', der - über die Leistungselektronik 111 - die Batterie 110 mit dem erzeugten elektrischen Strom auflädt.

Bei einem aus Elektromotor 109 und Verbrennungsmotor 102 gebildeten Hybridantrieb, insbesondere Parallel-Hybridantrieb, als Fahrantrieb für das Trägerfahrzeug 100 kann vor allem dessen Batterie 110 für die Stromversorgung des Arbeitsgerätes 1 mit genutzt werden.

### BEZUGSZEICHENLISTE

- 1: Arbeitsgerät, Mähgerät
- 2: Arbeitskopf, Mähkopf
- 2a: Kopf-Welle, Messer-Welle
- 3: Befestigungsvorrichtung
- 3a: Befestigungs-Basis
- 3b: Querversatz-Schiene
- 3c: Schlitten
- 4: Kopfmotor
- 4': Energiewandler, Generator
- 5: Energie-Leitung, Elektro-Leitung, Kabel
- 6: Energie-Quelle, Batterie
- 6a: Versorgungs-Batterie
- 6b: Puffer-Batterie
- 7a - d: Stellelement, Gewindespindel
- 8: Antriebsstutzen
- 9: Auslegerarm
- 9a - c: Armteil
- 10: Fahrtrichtung, Längsrichtung
- 11: Querrichtung
- 11': Querebene
- 12: Vertikale
- 13: Anschlussvorrichtung
- 14: Halterung
- 15a - e: Gelenk
- 16: Antriebswelle
- 17: Kupplungshülse
- 20: Steuerung
- 21: Sensor

- 100: Trägerfahrzeug
- 101: Zapfwelle
- 102: Fahrmotor, Verbrennungsmotor
- 103: Riemenscheibe
- 104, 104': Bordgenerator
- 105: Ladefläche
- 106: Fahrerkabine
- 107: Getriebe
- 108: Kopplungs Getriebe, Planetengetriebe
- 109: Elektromotor
- 110: Fahr-Batterie
- 111: Leistungs Elektronik
- 112: Rad
- 113: Achse
- 114 a, b: Ritzel

## Patentansprüche

1. Antreibbares **Arbeitsgerät** (1), insbesondere Mähgerät (1), zum Anbauen an einem Trägerfahrzeug (100), mit
- einem Arbeitskopf (2), der ein antreibbares Arbeitselement umfasst,
- einer Befestigungsvorrichtung (3) umfassend einen Auslegerarm (9), an dessen vorderen, freien Ende der Arbeitskopf (2) befestigt ist,
- einem Kopfmotor (4), insbesondere mit einer Dauerleistung von über 10 kW, der am Arbeitskopf (2) angeordnet ist,
- einer Energiequelle (6) zum Bereitstellen einer von dem Kopfmotor (4) verwertbaren Energieform,
- Energieleitungen (5), die mit dem Kopfmotor (4) einerseits und der Energiequelle (6) andererseits verbunden sind für die Energiezufuhr zum Kopfmotor (4),
- einer Steuerung (20), die wenigstens alle beweglichen Elemente des Arbeitsgerätes (1) steuert,
wobei
- der Kopf-Motor (4) ein Elektromotor (4) ist,
- die Energie-Leitungen (5) elektrische Leitungen (5) sind,
- die Energiequelle (6) eine Stromquelle (6), insbesondere ein Generator (4') und/oder eine Batterie (6) und/oder ein elektrischer Anschluss an das Bordnetz des Trägerfahrzeuges (100) ist oder eine Kombination aus diesen Elementen,
**dadurch gekennzeichnet, dass**
a) die Befestigungsvorrichtung (3) umfasst
- eine Befestigungsbasis, die am Trägerfahrzeug (100) befestigt werden kann mit einer in Querrichtung verlaufenden Querversatzschiene (3b), entlang welcher der Auslegerarm (9) verfahrbar ist,
- mittels eines Schlittens (3c), auf deren Oberseite der Auslegerarm (9) mit seinem Fahrzeug-seitigen Ende befestigt,
- und um eine aufrechte Achse drehbar ist,
- wobei der Auslegerarm (9) aus mehreren gelenkig miteinander verbundenen Armteilen (9a - d) besteht (A8),
- wobei die mehreren Gelenke (15a bis 15e) parallel zueinander verlaufende, quer zur Erstreckungsrichtung der Stangen-förmigen Armteile (9a bis 9d) verlaufende Schwenkachsen sind,
b) die mit dem Kopfmotor (4) elektrisch verbundene Batterie (6)
- entweder eine mit einem Generator (4') elektrisch verbundene Puffer-Batterie (6b) ist mit einer Kapazität von höchstens 20 kWh, die an der Befestigungsbasis (3a) für den Auslegerarmes (9) befestigt ist,
- oder eine Versorgungs-Batterie (6a) ist mit einer Kapazität von mindestens 20 kWh, die abseits der Befestigungsvorrichtung (3) und des davon getragenen Arbeitskopfes (2) angeordnet ist, und
c) der Kopfmotor (4) über eine Flüssigkeits-Kühlung verfügt.

2. Arbeitsgerät nach Anspruch 1,
**dadurch gekennzeichnet, dass**
- das Arbeitselement ein rotierend antreibbares Arbeitselement, insbesondere eine Kopf-Welle (2a), etwa eine Messerwelle (2a), ist, und/oder
- der Kopfmotor (4) fluchtend, insbesondere direkt, auf der Kopf-Welle (2a) angeordnet und mit dieser drehfest verbunden ist;
und/oder
- der Kopfmotor (4) über einen Riementrieb oder Kettentrieb mit der Kopf-Welle (2a) wirkt verbunden ist.

3. Arbeitsgerät nach einem der vorhergehenden Ansprüche,
**dadurch gekennzeichnet, dass**
das Arbeitsgerät (1) einen bewegbaren, insbesondere drehbaren, Antriebsstutzen (8) umfasst, der mechanisch mit dem Generator (4') wirkverbunden ist und so ausgebildet und angeordnet ist, dass er mechanisch mit einem vom Trägerfahrzeug (100) angetriebenen Antriebselement, insbesondere einer Zapfwelle (101), koppelbar ist.

4. Arbeitsgerät nach einem der vorhergehenden Ansprüche,
**dadurch gekennzeichnet, dass**
ein Generator (4') vorhanden ist, der
- entweder an der Befestigungsvorrichtung (3), bei einem Auslegerarm (9) an der Befestigungsbasis (3a) für den Auslegerarm (9), angeordnet ist und insbesondere eine Anschlussvorrichtung (13), insbesondere eine Anschlussaufnahme (13), zum Aufstecken auf die Front-Zapfwelle (101) oder die Heck-Zapfwelle (101) des Trägerfahrzeuges (100) oder zum Koppeln mit einem separaten-Motor, der ausschließlich das Arbeitsgerät mit Energie versorgt, umfasst,
- oder der Generator (4') abseits von der Befestigungsvorrichtung (3) und dem Arbeitskopf (2) angeordnet ist, insbesondere am Trägerfahrzeug (100) in der Nähe dessen Fahr-Motor (102), insbesondere im Motorraum, angeordnet werden kann und vorzugsweise mit dem Fahr-Motor (102) über ein umlaufendes Zugelement wie etwa einen Riemen oder eine Kette wirkverbunden werden kann.

5. Arbeitsgerät nach einem der vorhergehenden Ansprüche,
**dadurch gekennzeichnet, dass**
die einerseits mit dem Kopfmotor (4) elektrisch verbundene Batterie (6)
- entweder eine Puffer-Batterie (6b) ist mit einer Kapazität von höchstens 10 kWh , die andererseits mit dem Generator (4') elektrisch verbunden ist,
- oder eine Versorgungs-Batterie (6a) ist mit einer Kapazität von mindestens 50 kWh, ist.

6. Arbeitsgerät nach einem der vorhergehenden Ansprüche,
**dadurch gekennzeichnet, dass**
die Befestigungsvorrichtung (3), insbesondere deren Auslegerarm (9), mehrere Stellelemente (7 a - d) aufweist, die die Stellungen der gelenkig miteinander verbundenen Armteilen (9a - d) zueinander einstellen und die Stellelemente (7 a - d)
- entweder hydraulische Arbeitszylinder-Einheiten sind, die einen Hydraulik-Anschluss aufweisen zum Verbinden mit und Speisen durch die Bord-Hydraulik des Trägerfahrzeuges (100)
oder
- die Stellelemente (7 a - d) elektrische Stellelemente (7 a - d) sind und insbesondere Elektromagnete oder Elektromotore umfassen, die von der Energiequelle (6) mit elektrischer Energie versorgt werden.

7. Arbeitsgerät nach einem der vorhergehenden Ansprüche,
**dadurch gekennzeichnet, dass**
- das Arbeitsgerät (1), insbesondere der Arbeitskopf (2), Sensoren (21) umfasst, welche in der Lage sind, den Umfang der benötigten momentanen oder in Kürze benötigten Leistung des Kopfmotors (4) mittels der Steuerung (20) zu berechnen, und/oder die Steuerung (20) in der Lage ist, die Leistung des Kopfmotors (4) bedarfsgerecht automatisch zu steuern.

8. Arbeitsgerät nach einem der vorhergehenden Ansprüche,
**dadurch gekennzeichnet, dass**
das Arbeitsgerät (1)
- wenigstens eine erste zu montierende Baugruppe umfasst, die die Befestigungsvorrichtung (3), insbesondere Heckanbauteile oder Frontanbauteile, sowie den daran befestigtem Auslegerarm (9), den Arbeitskopf (2) und den gegebenenfalls vorhandenen Generator (4') und/oder die Pufferbatterie (6b), die dann insbesondere an der Befestigungsvorrichtung (3) befestigt sind, umfasst
- insbesondere eine zweite zu montierende Baugruppe umfasst, die eine Batterie (6), insbesondere eine große Versorgungs-Batterie (6a), umfasst sowie ein Ladegerät und/oder einen Zentral-Generator zum Laden der Versorgungs-Batterie (6a).

9. Arbeitsgerät nach einem der vorhergehenden Ansprüche,
**dadurch gekennzeichnet, dass**
die Steuerung (20) in der Lage ist, den Kopfmotor (4) hinsichtlich der Drehrichtung umzuschalten, und der Kopfmotor (4) hierfür entsprechend ausgebildet ist.

10. **Arbeitsfahrzeug** umfassend ein Trägerfahrzeug (100) und ein daran angebautes Arbeitsgerät (1),
**dadurch gekennzeichnet, dass**
das Arbeitsgerät (1) nach einem der vorhergehenden Ansprüche ausgebildet ist.

11. Arbeitsfahrzeug nach Anspruch 10,
**dadurch gekennzeichnet, dass**
das Trägerfahrzeug (100)
- ein insbesondere vom Fahr-Motor (102) angetriebenes mechanisches Element, insbesondere eine Front-Zapfwelle (101) und/oder eine Heck-Zapfwelle (101) und/oder eine Riemen-Scheibe (103),
und/oder
- einen elektrischen Anschluss zu seinem elektrischen Bordnetz, insbesondere seinem elektrischen Hochvolt- Bordnetz,
und/oder
- einen Hydraulik-Anschluss zu seinem hydraulischen Bordnetz und/oder
- einen Steuerungs-Anschluss zu seiner Fahr-Steuerung aufweist.

12. Arbeitsfahrzeug nach einem der vorhergehenden Ansprüche, **dadurch gekennzeichnet, dass** der Fahr-Antrieb des Trägefahrzeuges (100) wenigstens einen Fahr-Elektromotor umfasst, der von einer Versorgungs-Batterie (6a) mit Energie versorgt wird, die auch die Energie für das Arbeisgerät (1) zur Verfügung stellt.

13. Arbeitsfahrzeug nach einem der Ansprüche 10 bis 12,
**dadurch gekennzeichnet, dass**
- die Batterie (6), an dem von der Befestigungsvorrichtung (3) entfernten, gegenüberliegenden Ende des Trägerfahrzeuges (100) befestigt ist und/oder
- auf der Ladefläche (105) des Trägerfahrzeuges (100) befestigt ist.

14. **Verfahren** zum Betreiben des an einem Trägerfahrzeug (100) angebauten Arbeitsgerätes (1), nämlich des gesamten Arbeitsfahrzeuges nach Anspruch 11 oder 12,
**dadurch gekennzeichnet, dass**
die Steuerung (20) bei Erkennen unmittelbar, insbesondere innerhalb der nächsten 10 Sekunden, besser innerhalb der nächsten 5 Sekunden, bevorstehenden erhöhten Leistungsbedarfes des elektrischen Kopfmotors (4), insbesondere in Form von schwerem Mähgut, bereits vor Auftreten des erhöhten Leistungsbedarfs das Drehmoment des Kopfmotors (4) erhöht, insbesondere durch Zufuhr von zusätzlicher Energie aus der Batterie (6).

15. Verfahren nach Anspruch 14,
**dadurch gekennzeichnet, dass**
bei Absinken der Drehzahl des Kopfmotors (4) unter einen vorgegebenen ersten Grenzwert die Steuerung (20) die Leistungsabgabe des Kopfmotors (4) erhöht durch entsprechende Steuerung der Energiezufuhr, bis sich die Drehzahl des Kopfmotors (4) wieder oberhalb des ersten Grenzwertes befindet.

## Claims

1. Powerable working machine (1), in particular mowing working machine (1), for mounting on a carrier vehicle (100), having
- a working head (2) comprising a powerable working element,
- a fastening device (3) comprising an extension arm (9), to the front, free end of which the working head (2) is attached,
- a head motor (4), in particular with a continuous power of more than 10 kW, which is arranged at the working head (2)
- an energy source (6) for providing a form of energy which can be used by the head motor (4),
- energy lines (5) connected to the head motor (4) on the one hand and to the energy source (6) on the other hand for supplying energy to the head motor (4),
- a control unit (20) which controls at least all the movable elements of the working machine (1),
wherein
- the head motor (4) is an electric motor (4)
- the energy lines (5) are electric lines (5),
- the energy source (6) is a current source (6), in particular a generator (4') and/or a battery (6) and/or an electrical connection to the internal supply-system of the carrier vehicle (100) or a combination of these elements,
**characterised in that**
a) the fastening device (3) comprises
- a fastening base which can be attached to the carrier vehicle (100) with a transverse fastening rail (3b) running in the transverse direction, along which the extension arm (9) can be moved,
- by means of a slide (3c), on the upper side of which the extension arm (9) is fixed with its vehicle-side end,
- and is rotatable about an upright axis,
- wherein the extension arm (9) consists of a plurality of arm parts (9a - d), that are jointly connected to each other,
- wherein the plurality of joints (15a to 15e) are pivot axes extending parallel to each other and transverse to the direction of extension of the rod-shaped arm parts (9a to 9d),
b) the battery (6) electrically connected to the head motor (4) is
- either a backup battery (6b) electrically connected to a generator (4') and having a capacity of not more than 20 kWh, which is mounted on the fastening base (3a) for the boom arm (9)
- or a supply battery (6a) of a capacity of at least 20 kWh, which is
- located apart from the fastening device (3) and the working head (2) carried thereby, and
c) the head motor (4) has liquid cooling.

2. Working machine according to claim 1,
**characterised in that**
- the working element is a rotatably drivable working element, in particular a head shaft (2a), for example a cutter shaft (2a),
and/or
- the head motor (4) is arranged in alignment, in particular directly, on the head shaft (2a) and is connected thereto in a rotationally fixed manner; and/or
- the head motor (4) is operatively connected to the head shaft (2a) via a belt drive or chain drive.

3. Working machine according to one of the preceding claims,
**characterised in that**
the working machine (1) comprises a movable, in particular rotatable, drive connection socket (8) which is operatively connected mechanically to the generator (4') and is embodied and arranged in such a way that it can be coupled mechanically to a drive element driven by the carrier vehicle (100), in particular a power take-off shaft (101).

4. Working machine according to one of the preceding claims,
**characterised in that**
there is provided a generator (4') which is
- either arranged on the fastening device (3), in the case of a extension arm (9) on the fastening base (3a) for the extension arm (9), and in particular comprises a connection device (13), in particular a connection receptacle (13), for plugging onto the front power take-off shaft (101) or the rear power take-off shaft (101) of the carrier vehicle (100) or for coupling to a separate engine which exclusively supplies the working machine with power,
- or the generator (4') is arranged away from the fastening device (3) and the working head (2), in particular can be arranged on the carrier vehicle (100) in the vicinity of its drive motor (102), in particular in the motor compartment, and can preferably be operatively connected to the drive motor (102) by means of a circulating traction element such as a belt or a chain.

5. Working machine according to one of the preceding claims,
**characterised in that**
the battery (6), which is electrically connected to the head motor (4) on the one hand, is
- either a buffer battery (6b) with a capacity of at most 10 kWh, which on the other hand is electrically connected to the generator (4'),
- or a supply battery (6a) with a capacity of at least 50 kWh.

6. Working machine according to any one of the preceding claims,
**characterised in that**
the fastening device (3), in particular its extension arm (9), has a plurality of adjusting elements (7a - d) which adjust the positions of the arm parts (9a - d), which are connected to one another in an articulated manner, in relation to one another, and the adjusting elements (7a - d)
- are either hydraulic working cylinder units which have a hydraulic connection for connection to and supply by the on-board hydraulics of the carrier vehicle (100)
or
- the actuating elements (7a - d) are electrical actuating elements (7a - d) and comprise in particular electromagnets or electromotors which are supplied with electrical energy from the energy source (6).

7. Working machine according to one of the preceding claims,
**characterised in that**
the working machine (1), in particular the working head (2), comprises sensors (21) which are capable of calculating the extent of the required momentary or shortly required power of the head motor (4) by means of the control unit (20), and/or the control unit (20) is capable of automatically controlling the power of the head motor (4) as required.

8. Working machine according to one of the preceding claims,
**characterised in that**
the working machine (1)
- comprises at least a first assembly to be mounted, which comprises the fastening device (3), in particular rear attachment parts or front attachment parts, as well as the extension arm (9) fastened thereto, the working head (2) and the generator (4') and/or the buffer battery (6b), if present, which are then fastened in particular to the fastening device (3),
- in particular a second assembly to be mounted, comprising a battery (6), in particular a large supply battery (6a), and a charger and/or a central generator for charging the supply battery (6a).

9. Working machine according to any one of the preceding claims,
**characterised in that**
the control (20) is capable of switching the head motor (4) with respect to the direction of rotation, and the head motor (4) is appropriately embodied for this purpose.

10. A working **vehicle** comprising a carrier vehicle (100) and a working machine (1) mounted thereon,
**characterised in that**
the working machine (1) is embodied according to one of the preceding claims.

11. Working vehicle according to claim 10,
**characterised in that**
the carrier vehicle (100) comprises
- a mechanical element, in particular a front PTO shaft (101) and/or a rear PTO shaft (101) and/or a belt pulley (103), driven in particular by the drive motor (102),
and/or
- an electrical connection to its on-board electrical system, in particular its high-voltage on-board electrical system,
and/or
- a hydraulic connection to its hydraulic on-board system
and/or
- a control connection to its driving control system.

12. Working machine according to one of the preceding claims, **characterised in that**
the traction drive of the carrier vehicle (100) comprises at least one traction electric motor which is supplied with energy from a supply battery (6a) which also provides the energy for the working machine (1).

13. Working vehicle according to any one of claims 10 to 12,
**characterised in that**
- the battery (6) is attached to the opposite end of the carrier vehicle (100) remote from the fastening device (3)
and/or
- is attached to the loading area (105) of the carrier vehicle (100).

14. **Method** of operating the working machine (1) attached to a carrier vehicle (100), namely the entire working vehicle according to claim 11 or 12,
**characterised in that**
the control system (20) increases the torque of the head motor (4), in particular by supplying additional energy from the battery (6), when it detects an imminent increased power requirement of the electric head motor (4), in particular in the form of heavy mown material, immediately, in particular within the next 10 seconds, preferably within the next 5 seconds, before the increased power requirement occurs.

15. Method according to claim 14,
**characterised in that**
when the speed of the head motor (4) falls below a predetermined first limit value, the control unit (20) increases the power output of the head motor (4) by correspondingly controlling the energy supply until the speed of the head motor (4) is again above the first limit value.

## Revendications

1. Outil de **travail motorisé** (1), en particulier faucheuse (1), à monter sur un véhicule porteur (100), avec
- une tête de travail (2), qui comprend un élément de travail pouvant être entraîné,
- un dispositif de fixation (3) comprenant un bras (9), à l'extrémité libre avant duquel est fixée la tête de travail (2),
- un moteur de tête (4), en particulier avec une puissance continue de plus de 10 kW, qui est disposé sur la tête de travail (2),
- une source d'énergie (6) pour fournir une forme d'énergie utilisable par le moteur de tête (4),
- des lignes d'énergie (5) qui sont reliées au moteur de tête (4) d'une part et à la source d'énergie (6) d'autre part pour l'alimentation en énergie du moteur de tête (4),
- une commande (20) qui commande au moins tous les éléments mobiles de l'outil de travail (1),
dans lequel
- le moteur de tête (4) est un moteur électrique (4),
- les lignes d'énergie (5) sont des lignes électriques (5),
- la source d'énergie (6) est une source de courant (6), en particulier un générateur (4') et/ou une batterie (6) et/ou un raccordement électrique au réseau de bord du véhicule porteur (100) ou une combinaison de ces éléments,
**caractérisé en ce que**
a) le dispositif de fixation (3) comprend
- une base de fixation qui peut être fixée au véhicule porteur (100) est munie d'un rail transversal (3b) s'étendant dans le sens transversal, le long duquel le bras (9) peut être déplacé,
- au moyen d'un chariot (3c), sur la face supérieure duquel le bras (9) est fixé par son extrémité côté véhicule,
- et pouvant tourner autour d'un axe vertical,
- le bras en porte-à-faux (9) étant constitué de plusieurs parties de bras (9a - d) reliées entre elles de manière articulée (A8),
- la pluralité d'articulations (15a à 15e) étant des axes de pivotement parallèles les uns aux autres et s'étendant transversalement à la direction d'extension des parties de bras en forme de tige (9a à 9d),
b) la batterie (6) reliée électriquement au moteur de tête (4)
- est soit une batterie tampon (6b) reliée électriquement à un générateur (4'), d'une capacité maximale de 20 kWh, fixée à la base de fixation (3a) du bras (9),
- ou une batterie d'alimentation (6a) d'une capacité d'au moins 20 kWh, située à l'écart du dispositif de fixation (3) et de la tête de travail (2) supportée par celui-ci, et
c) le moteur de tête (4) dispose d'un système de refroidissement par liquide.

2. Outil de travail selon la revendication 1,
**caractérisé en ce que**
- l'élément de travail est un élément de travail pouvant être entraîné en rotation, en particulier un arbre de tête (2a), par exemple un arbre de couteau (2a),
et/ou
- le moteur de tête (4) est disposé en alignement, en particulier directement, sur l'arbre de tête (2a) et est solidaire en rotation de celui-ci ;
et/ou
- le moteur de tête (4) est relié fonctionnellement à l'arbre de tête (2a) par un entraînement par courroie ou par chaîne.

3. Outil de travail selon l'une quelconque des revendications précédentes,
**caractérisé en ce que**
l'outil de travail (1) comprend un embout d'entraînement (8) mobile, notamment rotative, qui est reliée mécaniquement en fonctionnement au générateur (4') et qui est conçue et disposée de manière à pouvoir être couplée mécaniquement à un élément d'entraînement, notamment une prise de force (101), entraîné par le véhicule porteur (100).

4. Outil de travail selon l'une des revendications précédentes,
**caractérisé en ce que**
un générateur (4') est présent, qui
- soit est disposé sur le dispositif de fixation (3), dans le cas d'un bras (9), sur la base de fixation (3a) pour le bras (9), et comprend notamment un dispositif de raccordement (13), en particulier un logement de raccordement (13), destiné à être enfiché sur la prise de force avant (101) ou la prise de force arrière (101) du véhicule porteur (100) ou à être couplé à un moteur séparé qui alimente exclusivement l'outil de travail en énergie,
- ou le générateur (4') est disposé à l'écart du dispositif de fixation (3) et de la tête de travail (2), peut notamment être disposé sur le véhicule porteur (100) à proximité de son moteur de traction (102), notamment dans le compartiment moteur, et peut de préférence être relié fonctionnellement au moteur de traction (102) par l'intermédiaire d'un élément de traction rotatif tel qu'une courroie ou une chaîne.

5. Outil de travail selon l'une des revendications précédentes,
**caractérisé en ce que**
la batterie (6) reliée électriquement au moteur de tête (4), d'une part
- soit est une batterie tampon (6b) d'une capacité inférieure ou égale à 10 kWh, reliée électriquement d'autre part au générateur (4')
- soit est une batterie d'alimentation (6a) d'une capacité d'au moins 50 kWh.

6. Outil de travail selon l'une quelconque des revendications précédentes,
**caractérisé en ce que**
le dispositif de fixation (3), en particulier son bras (9), présente plusieurs éléments de réglage (7 a - d) qui règlent les positions des parties de bras (9a - d) reliées entre elles de manière articulée les unes par rapport aux autres, et les éléments de réglage (7 a - d)
- soit sont des unités hydrauliques à cylindre de travail, qui présentent un raccord hydraulique pour la connexion et l'alimentation par le système hydraulique de bord du véhicule porteur (100) soit
- les éléments de réglage (7 a - d) sont des éléments de réglage électriques (7 a - d) et comprennent notamment des électroaimants ou des moteurs électriques qui sont alimentés en énergie électrique par la source d'énergie (6).

7. Outil de travail selon l'une des revendications précédentes,
**caractérisé en ce que**
- l'outil de travail (1), en particulier la tête de travail (2), comprend des capteurs (21) qui sont en mesure de calculer l'étendue de la puissance requise, instantanée ou à court terme, du moteur de tête (4) au moyen de la commande (20), et/ou la commande (20) est en mesure de commander automatiquement la puissance du moteur de tête (4) en fonction des besoins.

8. Outil de travail selon l'une des revendications précédentes,
**caractérisé en ce que**
l'outil de travail (1)
- comprend au moins un premier sous-ensemble à monter, qui comprend le dispositif de fixation (3), notamment des éléments de montage arrière ou des éléments de montage avant, ainsi que le bras (9) qui y est fixé, la tête de travail (2) et le générateur (4') et/ou la batterie tampon (6b) éventuellement présents, qui sont alors fixés notamment au dispositif de fixation (3),
- comprend en particulier un deuxième ensemble à monter, qui comprend une batterie (6), en particulier une grande batterie d'alimentation (6a), ainsi qu'un chargeur et/ou un générateur central pour charger la batterie d'alimentation (6a).

9. Outil de travail selon l'une quelconque des revendications précédentes, **caractérisé en ce que**
la commande (20) est en mesure d'inverser le sens de rotation du moteur de tête (4), et le moteur de tête (4) est conçu à cet effet.

10. Véhicule de travail comprenant un véhicule porteur (100) et un outil de travail (1) monté sur celui-ci,
**caractérisé en ce que**
l'outil de travail (1) est conçu selon l'une des revendications précédentes.

11. Véhicule de travail selon la revendication 10,
**caractérisé en ce que**
le véhicule porteur (100) présente
- un élément mécanique entraîné notamment par le moteur de traction (102), en particulier une prise de force avant (101) et/ou une prise de force arrière (101) et/ou une poulie (103),
et/ou
- un raccordement électrique à son réseau électrique de bord, notamment son réseau de bord électrique haute tension,
et/ou
- un raccordement hydraulique à son réseau de bord hydraulique
et/ou
- un raccordement de commande à sa commande de conduite.

12. Véhicule de travail selon l'une quelconque des revendications précédentes, **caractérisé en ce que** la propulsion du véhicule porteur (100) comprend au moins un moteur électrique de traction alimenté en énergie par une batterie d'alimentation (6a) qui fournit également l'énergie à l'outil de travail (1).

13. Véhicule de travail selon l'une des revendications 10 à 12,
**caractérisé en ce que**
- la batterie (6) est fixée à l'extrémité opposée du véhicule porteur (100), éloignée du dispositif de fixation (3)
et/ou
- est fixée sur la surface de chargement (105) du véhicule porteur (100).

14. **Procédé** pour faire fonctionner l'outil de travail (1) monté sur un véhicule porteur (100), à savoir l'ensemble du véhicule de travail selon la revendication 11 ou 12, **caractérisé en ce que**
la commande (20), en cas de détection d'un besoin accru de puissance du moteur électrique de tête (4) imminent, en particulier dans les 10 secondes suivantes, mieux dans les 5 secondes suivantes, en particulier sous la forme d'un produit fauché lourd, augmente le couple du moteur de tête (4) déjà avant l'apparition du besoin accru de puissance, en particulier par l'apport d'énergie supplémentaire provenant de la batterie (6).

15. Procédé selon la revendication 14,
**caractérisé en ce que**, lorsque la vitesse de rotation du moteur de tête (4) descend en dessous d'une première valeur limite prédéfinie, la commande (20) augmente la puissance fournie par le moteur de tête (4) en commandant de manière correspondante l'alimentation en énergie jusqu'à ce que la vitesse de rotation du moteur de tête (4) se trouve à nouveau au-dessus de la première valeur limite.
